**Europäisches Patentamt**

**European Patent Office**

**Office européen des brevets**

(19)

(11) Veröffentlichungsnummer: **0 142 020**

**A2**

(12) **EUROPÄISCHE PATENTANMELDUNG**

(21) Anmeldenummer: **84112079.3**

(22) Anmeldetag: **09.10.84**

(51) Int. Cl.⁴: **G 02 F 1/01**
**H 04 B 9/00**

(30) Priorität: **19.10.83 DE 3338007**

(43) Veröffentlichungstag der Anmeldung:
**22.05.85 Patentblatt 85/21**

(84) Benannte Vertragsstaaten:
**DE FR GB**

(71) Anmelder: **International Standard Electric Corporation**
**320 Park Avenue**
**New York New York 10022(US)**

(84) Benannte Vertragsstaaten:
**FR GB**

(71) Anmelder: **Standard Elektrik Lorenz Aktiengesellschaft**
**Hellmuth-Hirth-Strasse 42**
**D-7000 Stuttgart 40(DE)**

(84) Benannte Vertragsstaaten:
**DE**

(72) Erfinder: **Mohr, Friedemann**
**Keltenstrasse 28**
**D-7253 Renningen(DE)**

(74) Vertreter: **Schmidt, Werner, Dipl.-Phys. et al,**
**c/o Standard Elektrik Lorenz AG Patent- und**
**Lizenzwesen Kurze Strasse 8 Postfach 300 929**
**D-7000 Stuttgart 30(DE)**

(54) Optische Übertragungsstrecke.

(57) An den beiden Enden eines Lichtwellenleiters (3) einer Zweiwegübertragungsstrecke sind jeweils Stellglieder (4, 5) zur Regelung der Polarisationsrichtung des zu übertragenden Lichts vorhanden. Jedem Stellglied ist eine Regeleinrichtung (16, 17) zugeordnet.

EP 0 142 020 A2

Fig. 2

F.Mohr-6

## Optische Übertragungsstrecke

Die Erfindung geht aus von einer optischen Übertragungsstrecke wie im Oberbegriff des Anspruches 1 angegeben.
Eine solche Übertragungsstrecke ist aus der DE-OS 3 148 159
bekannt.

Bei der dort beschriebenen Übertragungsstrecke wird am
Ende der Übertragungsstrecke ein Regelsignal erzeugt, das
einem am Anfang der Übertragungsstrecke angeordneten
Stellglied zur Regelung des Polarisationszustandes des
Lichts zugeführt wird. Es ist also notwendig, das Regelsignal vom Ende der Übertragungsstrecke zum Anfang der
Übertragungsstrecke zu leiten. Bei Übertragungsstrecken
kleiner Länge (z. B. in Hydrophonen) bereitet dies keine
Schwierigkeiten. Bei Übertragungsstrecken großer Längen
hingegen wird der erforderliche Aufwand groß.

Aufgabe der Erfindung ist es, eine Lösung anzugeben, die
auch für lange Übertragungsstrecken geeignet ist.

Die Lösung dieser Aufgabe erfolgt mit den im Anspruch 1
angegebenen Mitteln. Eine vorteilhafte Weiterbildung ist
im Anspruch 2 angegeben.

ZT/P1-Sm/R

10.10.1983

0142020

F.Mohr-6

Bei der neuen Übertragungsstrecke ist zwischen der Regeleinrichtung und dem Stellglied keine lange elektrische Leitung notwendig. Alle zur Regelung des Polarisationszustandes des Lichts notwendigen Einrichtungen sind räumlich nahe beieinander.

Mit der neuen Übertragungsstrecke erzielt man bei der kohärenten Übertragungstechnik eine Verbesserung des Signal/Rauschverhältnisses.

Die Weiterbildung gemäß dem Anspruch 2 ist insbesondere für Übertragungsstrecken, bei denen in beiden Richtungen eine Übertragung erfolgt, geeignet. Aus dem Licht, das sich in der einen Richtung ausbreitet, wird ein Regelsignal für das erste Stellglied abgeleitet und aus dem Licht, das sich in der anderen Richtung ausbreitet, wird das Regelsignal für das zweite Stellglied abgeleitet. Dadurch erreicht man, daß die gesamte Lichtleistung ausgenutzt wird, während bei der Lösung nach Anspruch 1 im ungünstigsten Fall die Lichtleistung nur zu 50 % ausgenützt wird. Der Polarisationszustand wird stets auf den gewünschten Wert geregelt. Dadurch werden z.B. Zweiwegübertragungssysteme mit Polarisationsmultiplex möglich, deren Vorteile gegenüber konventionellen Zweiwegsystemen sind z.B.: geringere Dämpfung und damit besseres Signal/Rauschverhältnis, hohe Nebensprechfreiheit, geringe Störeinwirkung auf den Sender und damit geringeres Laserrauschen.

Ein weiterer Vorteil besteht darin, daß, wenn wechselweise verschiedene solcher polarisationsgeregelter Sender zusammengeschaltet werden, nicht auf den "polarisationsrichtigen" Anschluß geachtet werden muß, da durch die Regelung die Polarisationsebene automatisch richtig ausgerichtet wird. Es ist möglich, die Regeleinrichtung und das Stellglied in einer Steckverbindung, die zwei Übertragungsstrecken miteinander verbindet, anzubringen.

F.Mohr-6

Die Erfindung wird anhand der Zeichnungen beispielsweise näher erläutert. Es zeigt:

Fig. 1a        ein Ausführungsbeispiel mit einem Stellglied,

Fig. 1b        Einzelheiten des Ausführungsbeispiels nach Fig. 1a

Fig. 2         ein Ausführungsbeispiel mit je einem Stellglied an  beiden Enden der Übertragungsstrecke, und

Fig. 3 bis     Ausführungsbeispiele, bei denen die Übertragungs-
Fig. 5         strecke Bestandteil eines Faserkreisels ist.

Ein Laser 1 wird mit der zu übertragenden Information angesteuert. Das von dem Laser 1 abgegebene Licht gelangt über einen Polarisator 21 zu einer Lichtleitfaser 3 einer Übertragungsstrecke. Nach dem Verlassen der Lichtleitfaser 3 wird das Licht auf einen Polarisationsstrahlungsteiler 6 geleitet, der den Teil des Lichts, der den vorgeschriebenen Polarisationszustand aufweist, ungestört hindurchläßt und den Teil des Lichts, der nicht den vorgeschriebenen Polarisationszustand aufweist, zu einem optischen elektrischen Wandler 71 leitet. Das Licht mit dem vorgeschriebenen Polarisationszustand gelangt zu einem optisch/elektrischen Wandler 23, dessen Ausgangssignal die übertragene Information enthält.

Bei der Regelung des Polarisationszustandes wird unter anderem von der aus der DE-OS 31 50 697 bekannten Lehre Gebrauch gemacht. Das Ausgangssignal des optisch/elektrischen

F.Mohr-6

Wandlers 71 wird über einen Bandpaß 20, dessen Mittenfrequenz auf die Frequenz $\omega_2$ abgestimmt ist, zu einem
Mischer 13 geleitet. Ein Oszillator 9 erzeugt ein Signal
mit der Frequenz $\Omega_2$, das einerseits einem Stellglied 5
und andererseits dem Mischer 13 zugeführt wird. Das Ausgangssignal des Mischers 13 wird über einen Tiefpaß 15
zu einer Regeleinrichtung 17 geleitet. Der Tiefpaß 15 dient
dazu, daß der Regeleinrichtung 17 nur Gleichspannungsanteile des Mischerausgangssignals zugeführt werden. Das
Stellglied 5 wirkt auf die Lichtleitfaser ein und regelt
den Polarisationszustand des Lichts in der Lichtleitfaser.

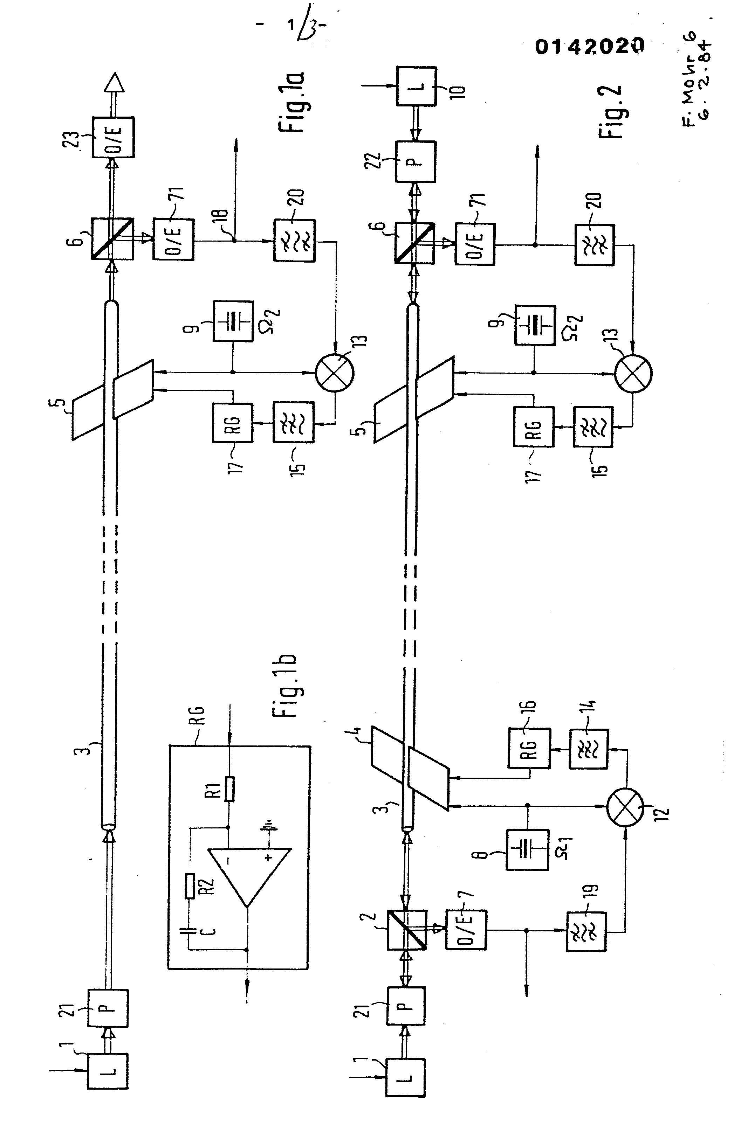

Die Realisierung, die Ansteuerung und die Wirkungsweise
des Stellglieds 5 ist aus der DE-OS 31 50 697 bekannt und
wird deshalb hier nicht näher erläutert. Als Regeleinrichtung wird ein PI-Regelverstärker verwendet, der anhand
der Fig. 1b erläutert wird.

Der Regelverstärker nach Fig. 1b enthält einen Differenzverstärker mit einem "Minus-Eingang" und einem "Plus-Eingang". Der Minus-Eingang ist über einen Widerstand R1 mit
dem Ausgang des Tiefpaßes 15 (Fig.1a) verbunden. Der Plus-Eingang des
Differenzverstärkers liegt auf Masse. Der Ausgang des
Differenzverstärkers ist mit dem Minus-Eingang des Differenzverstärkers über eine Kapazität C und einen Ohmschen
Widerstand R2 verbunden. Am Ausgang der Regeleinrichtung
wird das Regelsignal für das Stellglied 5 (Fig.1a) abgegeben.

Mit dieser Einrichtung ist es nur möglich, einen Teil der
Änderung der Polarisationsrichtung auszuregeln. Es wird
jedoch gewährleistet, daß zumindest 50 % der Lichtleistung
ausgenützt werden.

F.Mohr-6

Anhand der Fig. 2 wird eine Zweiweg-Übertragungseinrichtung
erläutert, bei der die Änderung der Polarisationsrichtung
auf der Übertragungsstrecke zumindest nahezu vollständig
ausgeregelt wird. Dadurch wird erreicht, daß in beiden
Richtungen der Zweigübertragungseinrichtungen das Licht
zu nahezu 100 % ausgenützt wird. Soweit bei dem Ausführungsbeispiel nach Fig. 2 gleiche Einrichtungen wie in der
Fig. 1a verwendet sind, sind auch die Bezugszeichen gleich
gewählt.

Zu der Informationsübertragung in den beiden Richtungen
der optischen Übertragungsstrecke sind an den beiden Enden
der Übertragungsstrecke jeweils ein Laser 1 und ein Laser 10
vorgesehen, die jeweils mit der zu übertragenden Information
angesteuert werden. Beiden Lasern ist jeweils ein Polarisator 21 und 22 nachgeschaltet. Im folgenden werden die
beiden Übertragungsrichtungen zunächst getrennt behandelt.

In der einen Übertragungsrichtung gelangt das von dem
Laser 1 abgegebene Licht über den Polarisator 21 und
einen Polarisationsstrahlungsteiler 2 zu der Lichtleitfaser 3 der Übertragungsstrecke und nach dem Durchlaufen
der Lichtleitfaser gelangt das Licht zu einem zweiten
Polarisationsstrahlungsteiler 6. Der Polarisationsstrahlungsteiler 6 ist so realisiert und angeordnet, daß das Licht,
daß die vorgeschriebene Polarisation aufweist, abgelenkt
und zu einem optisch/elektrischen Wandler 71 geleitet wird.
Nur das Licht mit der von der vorgeschriebenen Polarisation
abweichen Polarisation passiert den Polarisationsstrahlungsteiler 6 ohne Ablenkung und gelangt zu dem Polarisator 22.
In der Gegenrichtung gelangt das von dem Laser 10 abgegebene
Licht über den Polarisator 22 und den Polarisationsstrahlungsteiler 6 zu der Lichtleitfaser 3 der Übertragungsstrecke

F.Mohr-6

und das Licht mit der vorgeschriebenen Polarisation wird von dem Polarisationsstrahlungsteiler 2 um 90$^o$ abgelenkt und zu einem weiteren optisch/elektrischen Wandler 7 geleitet. Der Polarisationsstrahlungsteiler 2 läßt von dem vom Laser 10 abgegebenen Licht wiederum den Anteil ohne Ablenkung passieren, der nicht die vorgeschriebene Polarisation aufweist. Im Gegensatz zur Anordnung nach Fig. 1a sind hier die Polarisationsstrahlungsteiler 2 und 6 so gewählt und angeordnet, daß sie das Licht mit der vorgegebenen Polarisation ablenken und jeweils auf einen optisch/elektrischen Wandler lenken. Bei der Anordnung nach Fig. 1a wurde nämlich der Anteil des Lichts, der die vorgeschriebene Polarisation aufweist, ohne Ablenkung durchgelassen und das Licht, das nicht die vorgeschriebene Polarisation aufweist, zu dem optisch/elektrischen Wandler 71 abgelenkt. Dementsprechend unterscheidet sich auch die Regelung. Bei der Anordnung nach Fig. 1a erfolgt die Regelung so, daß das von dem optisch/elektrischen Wandler 71 abgegebene Signal Null wird, während bei der Einrichtung nach Fig. 2 die Regelung so erfolgt, daß die von den optisch/elektrischen Wandlern 7 und 71 abgegebenen Signale ihren Maximalwert einnehmen. Dann ist gewährleistet, daß die Polarisationsstrahlungsteiler 2 und 6 das gesamte Licht zu den ihnen zugeordneten elektrischen Wandlern leiten. Dadurch wird verhindert, daß Licht zu den Lasern 1 und 10 gelangt.

An den beiden Enden der Lichtleitfaser 3 sind jeweils Stellglieder 4 und 5 angeordnet. Diese Stellglieder sind so orientiert, daß sie jeweils mit der Polarisationsrichtung des an den beiden Enden in die Lichtleitfaser eingekoppelten Lichts einen Winkel von 45$^o$ bilden.

0142020

F.Mohr-6

Die Ausgangssignale der beiden optisch/elektrischen Wandler 7 und 71 werden jeweils aufgeteilt und zwar so, daß der jeweils größere Anteil zu der weiteren Signalverarbeitung geleitet wird und daß der verbleibende Teil zur Regelung der Polarisationsrichtung verarbeitet wird. Der zur Steuerung des Stellglieds 5 vorgesehene Signalanteil des Ausgangssignals des optisch/elektrischen Wandlers 71 gelangt über einen Bandpaß, dessen Mittenfrequenz $\Omega_2$ ist, zu einem Mischer 13 und das Ausgangssignal des Mischers 13 wird über einen Tiefpaß 15 zu einer Regeleinrichtung 17 geleitet. Das Ausgangssignal der Regeleinrichtung 17 steuert das Stellglied 5. Das Stellglied 5 erhält als weiteres Eingangssignal das Ausgangssignal eines Oszillators 9 mit der Frequenz $\Omega_2$ das außerdem dem Mischer 13 zugeführt wird. Die Regelung erfolgt wieder wie anhand der Fig. 1a erläutert, jedoch mit dem Unterschied, daß der Verstärker in der Regeleinrichtung ein invertierender Verstärker ist. Entsprechend erfolgt die Steuerung des Stellglieds 4 am anderen Ende der Lichtleitfaser 3. Der zur Regelung vorgesehene Anteil des Ausgangssignals des optisch/elektrischen Wandlers 7 gelangt über einen Bandpaß 19 mit der Mittenfrequenz $\Omega_1$ zu einem Mischer 12, dessen Ausgangssignal zu einem Tiefpaß 14 geleitet wird. Das Ausgangssignal des Tiefpasses 14 ist das Eingangssignal für eine Regeleinrichtung 16, deren Ausgangssignal das Stellglied 4 steuert. Das Stellglied 4 erhält als weiteres Steuersignal das Ausgangssignal 8 mit der Frequenz $\Omega_1$, das außerdem dem Mischer 12 zugeführt wird. Die Frequenzen $\Omega_1$ und $\Omega_2$ der beiden Oszillatoren 8 und 9 sind so gewählt, daß ihre Harmonischen $2\Omega_1$ und $2\Omega_2$ sowie bei höheren Ansprüchen an die Störfreiheit auch $4\Omega_1$ und $4\Omega_2$ außerhalb des Spektrums der zu übertragenden Informationen liegen.

F.Mohr-6

Die Regeleinrichtung am linken Ende der Übertragungsstrek-ke ist dann wirksam, wenn Licht von rechts nach links übertragen wird und die Regeleinrichtung am rechten Ende der Übertragungsstrecke ist dann wirksam, wenn Licht von links nach rechts übertragen wird.

Nachfolgend einige Bemerkungen zum Ablauf der Regelung: Es wird angenommen, daß zunächst Licht von links nach rechts übertragen wird. Dann wird nach Durchlaufen der Lichtleitfaser 3 das Stellglied 5 so gesteuert, daß ein Teil der Änderung der Polarisationsrichtung ausgeregelt wird. Eine vollständige Regelung der Polarisationsrichtung in die vorgeschriebene Richtung wird hier noch nicht erreicht. Danach wird angenommen, daß Licht von rechts nach links über die Lichtleitfaser 3 übertragen wird. Für diese Über-tragung erzeugt das Stellglied 5 eine "Vorverzerrung" der Polarisationsrichtung des Lichts. Das Stellglied 4 wird jetzt so gesteuert, daß die Polarisationsrichtung des Lichts nach Durchlaufen der Lichtleitfaser 3 ihre vorgeschriebene Richtung aufweist. Man kann also sagen, daß das Stellglied am Anfang der Übertragungsstrecke für das zu übertragende Licht jeweils eine geregelte Vorverzerrung der Polarisationsrichtung bewirkt und daß das Stellglied am Ende der Licht-leitfaser die Wirkung einer (ebenfalls) geregelten Nachentzerrung hat. Durch Vorverzerrung und Nachentzerrung der Polarisationsrichtung erreicht man, daß das Licht nach Durch-laufen der Lichtleitfaser stets die vorgeschriebene Polari-sation mit der richtigen Neigung und richtigen Elliptizität der Polarisationsellipse aufweist. Störende Einwirkungen auf die Polarisationsrichtung während des Durchlaufens der Licht-leitfaser werden somit ausgeregelt und es wird gewährleistet, daß das Licht zu nahezu 100 % ausgenützt werden kann. Im Vergleich mit herkömmlichen Zweiwegübertragungssystemen er-zielt man pro Übertragungsrichtung eine Reduzierung der Ver-luste um 6dB.

F.Mohr-6

Auf die Bandpässe 19 und 20 kann verzichtet werden, wenn die Spektren der Nachrichten genügend weit von $\Omega_1$ und $\Omega_2$ entfernt sind.

Die Wahl der Frequenzen $\Omega_1$ und $\Omega_2$ sowie die Realisierung und die Ansteuerung der Stellglieder 4 und 5 ist aus der genannten DE-OS 31 50 697 bekannt. Für die beiden Frequenzen $\Omega_1$ und $\Omega_2$ ist es notwendig, daß sie sich entweder in ihrer Frequenz oder in ihrer gegenseitigen Phasenlage unterscheiden. Unterscheiden sie sich durch unterschiedliche Phasen, dann muß die Phasendifferenz $(2n+1) \cdot \frac{\pi}{2}$ sein.

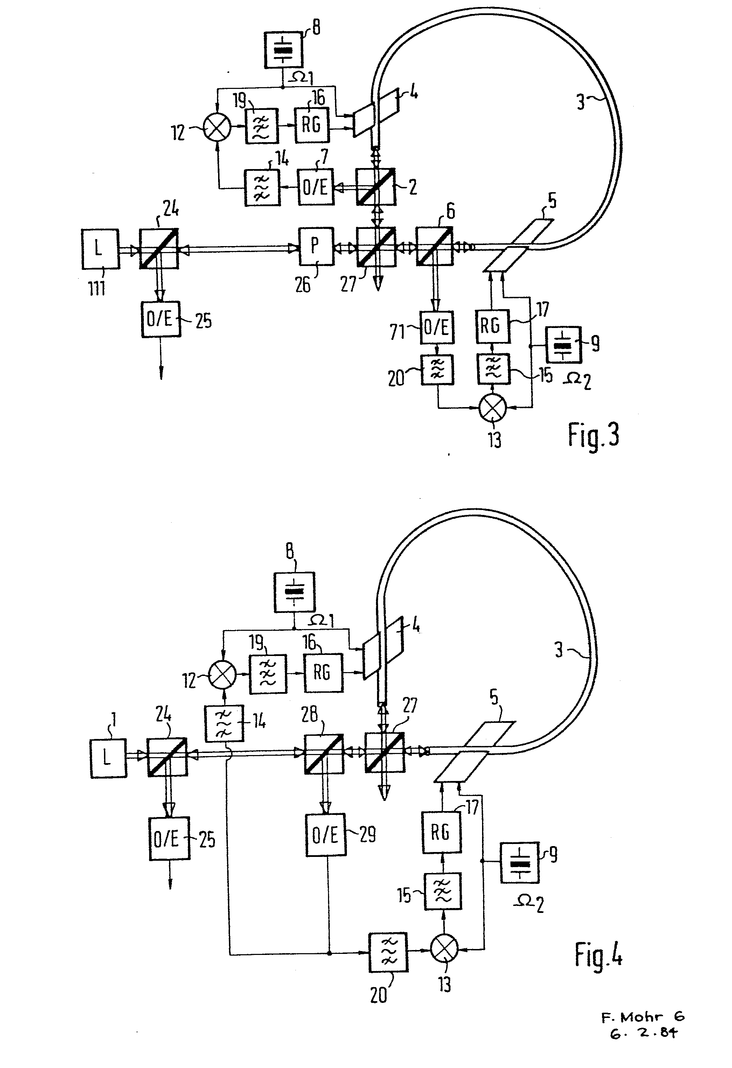

Eine optische Zweiwegübertragungsstrecke ist auch in einem Faserkreisel, wie er beispielsweise aus der DE-OS 31 36 688 bekannt ist, vorhanden. Bei einem Faserkreisel wird ein Lichtstrahl in zwei Teilstrahlen aufgeteilt und die beiden Teilstrahlen durchlaufen eine spulenförmig angeordnete Lichtleitfaser in entgegengesetzten Richtungen. Nach dem Durchlaufen der Lichtleitfaser werden die beiden Teilstrahlen wieder einander überlagert und gelangen zu einer Auswerteeinrichtung. Bei dem Faserkreisel ist die spulenförmig angeordnete Lichtleitfaser die Zweiwegübertragungsstrecke. Bei der Auswertung der Drehgeschwindigkeit mittels eines solchen Faserkreisels macht es sich sehr störend bemerkbar, wenn die Polarisationsrichtung der Lichtstrahlen, die sich in der Lichtleitfaser ausbreiten, durch Einflüsse von außen verändern. Deshalb läßt sich bei einem solchen Faserkreisel die anhand der Fig. 2 erläuterte Regelung besonders vorteilhaft anwenden. Ein Faserkreisel mit einer solchen Regelung wird anhand der Fig. 3 erläutert (gleiche Einrichtungen bei den Faserkreiseln, die anhand der Fig.2 und 3 erläutert werden, sind mit den gleichen Bezugzeichen versehen).

F.Mohr-6

Ein von einem Laser 111 erzeugter Lichtstrahl gelangt über einen Strahlungsteiler 24 zu einem Polarisator 26 und dessen Ausgangssignal wird zu einem Strahlungsteiler 27 geleitet. Der Strahlungsteiler 27 teilt den Lichtstrahl in zwei Teilstrahlen auf und die beiden Teilstrahlen gleicher Intensität durchlaufen eine Lichtleitfaser 3 in entgegengesetzten Richtungen. Zwischen Strahlungsteiler 27 und dem einen Ende der Lichtleitfaser ist ein Polarisationsstrahlungsteiler 2 und zwischen dem Strahlungsteiler 27 an dem anderen Ende der Lichtleitfaser ist ein Polarisationsstrahlungsteiler 6 angeordnet. Im Bereich der beiden Enden der Lichtleitfaser sind jeweils Stellglieder 4 und 5 vorgesehen, die auf die Lichtleitfaser 3 zur Beeinflußung der Polarisationsrichtung einwirken. Von dem einen Teilstrahl wird durch den Polarisationsstrahlungsteiler 2 der Teil zu einem optisch/elektrischen Wandler 7 ausgekoppelt, der nicht die vorgeschriebene Polarisationsrichtung aufweist. Zur Erzeugung des Regelsignals sind wie beim Ausführungsbeispiel der Fig. 2 ein Bandpaß 14, ein Mischer 12, ein Tiefpaß 19, eine Regeleinrichtung 16, und ein Oszillator 8 vorgesehen. Durch den Polarisationsstrahlungsteiler 6 wird von dem anderen Teilstrahl der Anteil ausgekoppelt, der nicht die vorgeschriebene Polarisationsrichtung aufweist. Zur Regelung sind ebenfalls wie bei der Fig. 2 außer dem optisch/elektrischen Wandler 71 ein Bandpaß 20, ein Mischer 13, ein Tiefpaß 15, eine Regeleinrichtung 17 und ein Oszillator 9 vorgesehen. Die beiden Teilstrahlen werden nach dem Durchlaufen der Lichtleitfaser 3 durch den Strahlungsteiler 27 einander überlagert und gelangen über den Polarisator 26 zu dem Strahlungsteiler 24, der den durch Überlagerung erzeugten Lichtstrahl

0142020

F.Mohr-6

zu einem optisch/elektrischen Wandler 25 ablenkt. Aus dem Ausgangssignal des optisch/elektrischen Wandlers 25 wird die Drehgeschwindigkeit ermittelt.

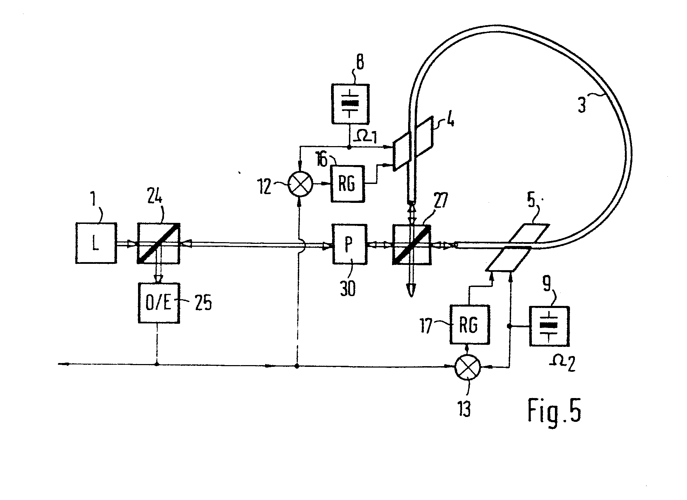

Diese Anordnung läßt sich, wie anhand der Fig.4 nachfolgend erläutert, vereinfachen. Bei der Anordnung nach Fig.4 sind die beiden Polarisationsstrahlungsteiler 2 und 6 ersetzt durch einen Polarisationsstrahlungsteiler 28. Der Polarisationsstrahlungsteiler 28 ist zwischen den beiden Stahlungsteilern 24 und 27 angeordnet und er lenkt den Teil des durch die Überlagerung der beiden Teilstrahlen im Strahlungsteiler 27 erzeugten Lichtstrahls, der nicht die vorgeschriebene Polarisation aufweist, ab. Der Polarisationsstrahlungsteiler 28 übernimmt neben seiner Funktion als Detektorelement für die unerwünschte Polarisation auch gleichzeitig die Aufgabe der Sicherung der Reziprozität, die bei dem Ausführungsbeispiel nach Fig.3 der Polarisator 26 wahrgenommen hat. Dieser Anteil des Lichtstrahls wird zu einem optisch/elektrischen Wandler 29 geleitet, dessen Ausgangssignal in zwei gleiche Teile aufgeteilt wird. Der eine Teil gelangt zu dem Bandpaß 14 und der andere Teil gelangt zu dem Bandpaß 20. Der optisch/elektrische Wandler 29 ersetzt die beiden optisch/elektrischen Wandler 7 und 71 bei dem Ausführungsbeispiel nach Fig.3. Im übrigen entspricht die Anordnung nach Fig.4 der Anordnung nach der Fig.3.

Anhand der Fig.5 wird ein noch weiter vereinfachtes Ausführungsbeispiel erläutert. Gegenüber der Anordnung nach Fig.3 fehlen bei der Anordnung nach Fig.4 die Bandpässe 14 und 20, die Tiefpässe 19 und 15, die optisch/elektrischen Wandler 7 und 71 sowie die beiden Polarisationsstrahlungsteiler 2 und 6. Der Verzicht auf die Filter ist möglich, wenn der Laser im Dauerstrichbetrieb betrieben wird, so daß $\Omega_1$ und $\Omega_2$ nicht von einem starken Störspektrum überlagert sind. Die beiden

F.Mohr-6

Frequenzen $\Omega_1$ und $\Omega_2$ müssen bei den Ausführungsbeispielen nach Fig.3, Fig.4 und Fig.5 so gewählt werden, daß sie gleich einem ganzzahligen Vielfachen von $2\pi$ x der reziproken Laufzeit des Lichts durch die Lichtleitfaser sind. Bei einer Faserlänge von 1000 m kann $\Omega_1 = 2\pi \cdot 400$ kHz und $\Omega_2 = 2\pi \cdot 600$ kHz gewählt werden.

Bei dem Ausführungsbeispiel nach Fig.5 wird zur Erzeugung der Regelsignale ein Teil des Ausgangssignals des optisch/ elektrischen Wandlers 25, ausgekoppelt. Dieses ausgekoppelte Signal wird sowohl dem Mischer 12 als auch dem Mischer 13 zugeführt. Die auf den optisch/elektrischen Wandler 25 gelangende Lichtenergie ist komplementär zu dem Betrag der Lichtenergie, die bei dem Ausführungsbeispiel nach Fig.4 auf den optisch/elektrischen Wandler 29 gelangt. Während also bei den Ausführungsbeispielen nach Fig.3 und Fig.4 die Regelung so erfolgt,daß das Ausgangssignal des optisch/elektrischen Wandlers 29 (entsprechend dem Ausführungsbeispiel nach Fig.1a) auf Null geregelt wird, erfolgt bei dem Ausführungsbeispiel nach Fig.5 die Regelung so, daß der Wert des Signals, das vom Ausgangssignal des optisch/elektrischen Wandlers 25 ausgekoppelt wird, seinen Maximalwert erreicht, ähnlich der Regelung nach Fig.2, wo die Regelung auch so erfolgte, daß die Ausgangssignale der optisch/elektrischen Wandler 7 und 71 ihre Maximalwerte erzielten.

Die Erfindung wurde anhand von diskreten Bauelementen beschrieben. Es ist jedoch auch eine Realisierung in der Technik der integrierten Optik möglich. In diesem Fall können die Stellglieder in vorteilhafter Weise als TE/TM-Mode-Konverter realisiert werden. Diese sind an sich aus dem Buch von T.Tamir, "Integrated Optics", Springer-Verlag Berlin 1979, bekannt. Aus diesem Buch ist jedoch nicht bekannt, daß diese Bauelemente als Polarisationsstellglieder verwendet werden können.

0142020

F.Mohr-6

Patentansprüche

1. Optische Übertragungsstrecke mit einem Lichtwellenleiter (3) zur Übertragung polarisierten Lichts und mit
einem Stellglied zur Regelung der Polarisationsrichtung
des Lichts, dem ein aus dem übertragenen Licht abgeleitetes
Regelsignal, das in einer Regeleinrichtung (17) erzeugt
wird, zugeführt wird, und das an einem Ende der Übertragungsstrecke angeordnet ist, d a d u r c h   g e k e n n -
z e i c h n e t, daß sich die Regeleinrichtung (17) und
das Stellglied (5) an demselben Ende der Übertragungsstrecke befinden.

2. Optische Übertragungsstrecke nach Anspruch 1, dadurch
gekennzeichnet, daß an beiden Enden  der Übertragungsstrecke    jeweils ein Stellglied (4, 5) und eine Regeleinrichtung (16, 17) vorhanden sind.

3. Optische Übertragungsstrecke nach Anspruch 1 oder 2,
dadurch gekennzeichnet, daß das oder die Stellglieder
TE/TM-Mode-Konverter sind.

ZT/P1-Sm/R
10.10.1983

0142020

F. Mohr 6.2.84

Fig.1a

Fig.1b

Fig.2

Fig.3

Fig.4

F. Mohr 6
6. 2. 84

Fig.5

F. Mohr 6
6.2.84